# EUROPÄISCHE PATENTSCHRIFT

(11) **EP 3 774 253 B1**
(45) Veröffentlichungstag und Bekanntmachung des Hinweises auf die Patenterteilung: **09.08.2023**
(21) Anmeldenummer: 19717259.6
(22) Anmeldetag: 05.04.2019
(51) Int. Cl.: B29C 33/42, B08B 17/06, B29C 33/44

(54) **MIKROSTRUKTURIERTER GEGENSTAND**
MICROSTRUCTURED OBJECT
OBJET MICROSTRUCTURÉ

(30) Priorität: 05.04.2018 DE 102018108053
(43) Veröffentlichungstag der Anmeldung: 17.02.2021
(73) Patentinhaber: Fraunhofer-Gesellschaft zur Förderung der angewandten Forschung e.V., 80686 München (DE)
(72) Erfinder: VISSING, Klaus-Dieter, 28359 Bremen (DE); WILKEN, Ralph, 28359 Bremen (DE); BERGER, Waldemar, 28359 Bremen (DE)
(74) Vertreter: Eisenführ Speiser
(86) Internationale Anmeldenummer: PCT/EP2019/058687
(87) Internationale Veröffentlichungsnummer: WO 2019/193174

(56) Entgegenhaltungen:
- EP-A1- 2 398 629
- WO-A1-2015/074077
- WO-A1-2017/037918
- DE-A1- 10 138 036
- US-A1- 2017 095 019

## Beschreibung

Die Erfindung betrifft einen Gegenstand mit wenigstens teilweise gekrümmter Oberfläche mit einer Mikrostrukturierung aus Strukturierungselementen, die so ausgerichtet sind, dass der Gegenstand bei seiner Herstellung günstig aus seiner Form entnommen werden kann. Die Erfindung betrifft ferner eine Form oder ein Formteil für einen erfindungsgemäßen strukturierten Gegenstand, die bzw. das an seiner Oberfläche das Negativ der Mikrostrukturierung umfasst sowie die Verwendung einer Mikrostrukturierung zur Erzeugung einer Oberfläche mit einem hohen statischen Wasserrandwinkel. Außerdem betrifft die Erfindung ein Verfahren zur Erzeugung einer Form oder eines Formteiles für einen erfindungsgemäßen mikrostrukturierten Gegenstand.

### Stand der Technik

Eine hohe Anzahl wissenschaftlicher und technischer Arbeiten beschäftigt sich mit der Fragestellung, welche Strukturen am besten für die Erzeugung superhydrophober oder auch superhydrophiler Oberflächen geeignet sind [1 - 5], wie sie sich beim Trocknen von Wassertropfen verhalten [6] und ob sie eine ausreichende mechanische Stabilität aufweisen [7]. Dabei werden häufig biologische Oberflächen, wie z. B. das Lotusblatt als Vorbild genommen. Um besonders effektive und besonders hydrophobe Oberflächen herzustellen, sind hierarchische Strukturen [8] oder auch bestimmte Aspektverhältnisse [9] notwendig.

Nur wenige Arbeiten beschäftigen sich mit der Herstellung derartiger Oberflächenstrukturen. Letztendlich ist dies jedoch für viele Anwendungsbereiche (Sanitärprodukte, Lebensmittelverarbeitung, Verpackungsindustrie, Sportgeräte, Schiffe, Spielzeuge u.v.m.) notwendig, um nicht bei ebenen Produkten, wie CDs, Lab-on-a-chip oder Light-Guide Streuscheiben zu verharren oder gezwungen zu sein, mehrstufige Herstellungsverfahren (Prägen, LIGA, etc.) zu verwenden. Unbekannt sind jedoch Arbeiten oder Erfindungen, die sich der Herstellung superhydrophober, 3-dimensional gekrümmter Strukturoberflächen mittels formgebundener Verfahren widmen.

Bei der Benetzung einer Festkörperoberfläche durch eine polare Flüssigkeit wie Wasser unterscheidet man zwischen dem Wenzel-Stadium (homogene Benetzung) und dem Cassie-Baxter-Stadium (heterogene Benetzung) [18]. Letztere zeichnet sich dadurch aus, dass die Flüssigkeit nicht in die Oberflächenstruktur eindringen kann, es bildet sich ein Luftpolster zwischen den Strukturen. Wassertropfen bilden so leicht einen statischen Kontaktwinkel von über 150° aus und zeigen dabei eine nahezu kreisrunde sphärische Form auf [BARTHLOTT und NEINHUIS, 1997; BICO et al., 2001]. Somit kann ein Wassertropfen rollen statt wie üblich rutschen. Durch dieses Verhalten wird ein sehr geringer Abrollwinkel (der Winkel gegen die Horizontale, ab der der Wassertropfen rollt) von weniger als 10° erreicht.

Eine weiter differenzierte Darstellung im Hinblick auf das strukturbedingte Benetzungsverhalten findet sich in "The rose petal effect and the modes of superhydrophobicity" [9]. Dort wird zusätzlich unterschieden zwischen der Benetzung bzw. Nichtbenetzung von Mikro- und Nanostrukturen. Dies ist insofern wichtig, als sich besonders gute Hydrophobierungseffekte erzielen lassen, wenn Mikro- und Nanostrukturen zusammenwirken. Man spricht von hierarchischen Strukturen.

In der Natur werden ausschließlich örtlich zufällige Strukturmuster verwendet, welche man vielleicht am besten mit gestrahlten Oberflächen vergleichen kann oder auch mit partikelgefüllten Lacken. Kennzeichnend hierfür ist, dass die genaue Ausbildung der Struktur an einem bestimmten Ort undefiniert ist, jedoch als Gesamtheit, insbesondere über ihre Eigenschaften sehr wohl beschrieben werden kann.

Im Gegensatz hierzu können in der Technik, z. B. über lithographische Verfahren oder dem Nano-Imprint Verfahren oder durch Prägeverfahren sehr, sehr regelmäßige Oberflächenstrukturen hergestellt werden. Zur Herstellung von hierarchischen Strukturen werden häufig mehrere Verfahren miteinander kombiniert (z. B. US 2010/0028604 A1).

Neben regelmäßigen Strukturen werden in der Technik über hydrophobierte Partikel oder Füllstoffe auch unregelmäßige Oberflächenstrukturen hergestellt, welche über superhydrophobes Verhalten verfügen. Daneben können mit Hilfe von Plasmaverfahren superhydrophobe Nanostrukturen hergestellt werden, welche optisch transparent sind. Die Nanostrukturen sind mechanisch jedoch sehr empfindlich und können zudem auch schnell mit Fremdmaterial aufgefüllt werden. Die mechanische Instabilität der Hydrophobie der Oberflächen und der Nano- und Mikrostrukturierung, z. B. gegenüber Berührung und Reibung, führt zu einem Verlust der Hydrophobie und somit auch zum Verlust des Selbstreinigungseffekts (CALLIES und QUERE, 2005; YOUNGBLOOD und SOTTOS, 2008). Bei partikulären Schichten bzw. Oberflächen kann zudem nicht ausgeschlossen werden, dass sich während des Gebrauchs Partikel ablösen, so dass einerseits lokal Funktionsverlust erfolgen kann und aus Kontaminationsgründen nicht für alle Anwendungen in Betracht gezogen werden sollten.

Wie zuvor erwähnt können mikro- und nanostrukturierte Oberflächen mit unterschiedlichen Verfahren erzeugt werden. Einerseits solche, die eine ungeordnete, raue Oberfläche ausbilden, wie z. B. Hydrophobierungssprays (z. B. E2/200 FE60, Dr. Tillwich GmbH), die Zugabe hydrophober Partikel zu einer Kunststoffmasse, das Aufbringen von Nanopartikeln, ggf. kombiniert mit einer Nachhydrophobierung der gefertigten Bauteiloberfläche (WO 2015/177229A2) oder auch die Aufrauhung mittels Plasmen (DE102005049280A1, DE102006056578A1, DE102007059886B4). Geordnete Funktionsstrukturen andererseits werden mittels lithographischer Verfahren, Prägen, Spritz- und Extrusionsprägen hergestellt. Diesen Verfahren ist gemein, dass zunächst ein formgebendes Werkzeug (zumeist metallisch) herzustellen ist. Für dessen Strukturierung hat sich insbesondere die Laserstrukturierung [12,13] bewährt.

Gerade wenn Bauteile mit strukturierten Oberflächenbereichen in Mengen kostengünstig herstellbar sein sollen, muss man Verfahren der Kunststoffverarbeitung in Betracht ziehen. In diesem Verfahrensbereich beschäftigt man sich z. B. mit dem variothermen Spritzguss oder den Prägeverfahren [10]. Der Mikrospritzguss ist einer der effizientesten Prozesse für die Fertigung von thermoplastischen Mikroteilen. Mit diesem Herstellungsverfahren kann in kurzer Zeit eine hohe Stückzahl an Komponenten mit gleichbleibend guter Bauteilqualität und in hoher Genauigkeit angefertigt werden. Dadurch eignet sich dieser Prozess sehr gut für die Herstellung von 3D-Bauteilen mit makro- und mikrostrukturierter Oberfläche [14].

DE10210673A1 beispielsweise beschreibt einen Spritzgusskörper mit zumindest einer Oberfläche, die selbstreinigende Eigenschaften aufweist, dadurch gekennzeichnet, dass die Oberfläche zumindest eine fest verankerte Lage von Mikropartikeln aufweist, welche Erhebungen bilden. Vorteilhaft ist hierbei, dass auf vorhandene Werkzeuge Mikropartikel gegeben werden können, die sodann auf die Oberfläche des Spritzgussbauteils übertragen werden. Weiterhin vorteilhaft ist, dass die Entformbarkeit gegeben ist. Nachteilig ist, dass es sich um ungeordnete Partikel handelt, welche üblicherweise nur mechanisch (teilweise durch die Matrix umschlossen) in die Oberfläche der Spritzgussmasse eingebettet werden. Somit sind sie mechanisch nur mangelhaft gebunden. Praktisch ist die Aufbringung der Mikropartikel auf beliebige Flächen schwierig. Sie rutschen von schrägen Flächen, können leicht mehrere Lagen bilden oder auch in bestimmten Bereichen nur ausgedünnt vorliegen. Zudem lassen sie sich einfach durch den Spritzgussprozess selbst wegdrücken, so dass es zu Partikelansammlungen kommen kann.

Derartige Aspekte haben dazu geführt, dass trotz des hohen Anwendungspotentials bislang nur wenige technische Anwendungen superhydrophober Oberflächen erfolgreich auf dem Markt eingeführt werden konnten.

Weitere Gegenstände mit speziellen Oberflächeneigenschaften sind in der WO 2017/037918 A1, der WO 2015/074077 A1 und der US 2017/095019 A1 offenbart.

Neben dem Aspekt der günstigen und reproduzierbaren Herstellbarkeit ist ein weiterer Grund hierfür die mechanische Instabilität der nano- und mikrostrukturierten Oberflächen gegenüber mechanischen Einflüssen z. B. durch Berührung und Reibung, welche zu einem Verlust der Hydrophobie und Selbstreinigung der Oberfläche führen kann (CALLIES und QUÉRÉ, 2005; YOUNGBLOOD und SOTTOS, 2008).

Probleme gibt es zudem deshalb, weil auch dreidimensional geformte Bauteile mit entsprechenden Oberflächenstrukturen auszustatten sind. Regelmäßige Superhydrophobierungsstrukturen werden derzeit nahezu ausschließlich auf ebenen Flächen hergestellt. Die Strukturen zeichnen sich durch im Vergleich zur Strukturhöhe relativ große Abstände zwischen den einzelnen Strukturelementen aus. Eine Übertragung auf dreidimensional gekrümmte Oberflächen ist kaum vorstellbar, insbesondere dann nicht, wenn das hergestellte Bauteil zuverlässig und einfach aus einer Gießform entnommen werden können soll. Der Entformungsvorgang wirkt den Strukturen entgegen. Es kommt zu Verklammerungen. Der letzte Aspekt führt zu signifikanten Schwierigkeiten, weil sich durch die Krümmung die einzelnen Strukturen anders zueinander anordnen als bei einer ebenen Fläche. Spitzen rücken bei Innenradien näher aneinander oder bei Außenradien auch voneinander ab. Durch derartige Änderungen der funktionsgebenden Struktur kann z. B. die Superhydrophobie nicht an jedem Ort sichergestellt werden, denn der Strukturabstand ändert sich.

Folgt beispielsweise die Oberflächenstruktur der Bauteilgeometrie, wie bei einer strukturierten Folie, welche gekrümmt wird, so ist das Bauteil nicht mehr zu entformen. Biegt man in Gedanken die Strukturen wieder gegen die Bauteilkrümmung, so ergibt sich zwar eine Oberfläche, welche zwar der Form entnehmbar ist, jedoch jetzt Strukturspitzen aufweist, die empfindlich sind gegen mechanische Belastungen.

Technisch sind neben dem Selbstreinigungseffekt optische Strukturen [Mottenaugenstruktur (200nm), Mikrospiegel,-linsen, -reflektoren (10 - 100µm) und Mikroprismen (0,5 - 1,5 mm) von Interesse.

Somit bestand die Aufgabe, Oberflächenstrukturen für Gieß- bzw. Spritzgussprozesse, insbesondere für Kunststoffe und Metalle, auf gekrümmten Oberflächen anzugeben, welche eine oder mehrere der folgenden Eigenschaften aufweisen:
- Sie sollten geeignet sein, superhydrophobe bzw. superhydrophile Oberflächen auszubilden.
- Die Strukturen sollten auf gekrümmten, bevorzugt sogar auf mehrfach gekrümmten Teilflächen so angeordnet sein, dass das Bauteil einfach aus einer Form entnommen werden kann, in der das Bauteil entsteht, auf dessen Oberfläche die Strukturen angeordnet sind.
- Sie sollten mechanisch möglichst stabil sein.
- Sie sollten möglichst gegenüber senkrecht auf der jeweiligen Oberfläche liegenden Flüssigkeitstropfen eine möglichst gleichmäßige hydrophobe bzw. hydrophile Wirkung besitzen.

Diese Aufgabe wird gelöst durch einen Gegenstand mit wenigstens teilweise gekrümmter Oberfläche mit einer Mikrostrukturierung aus Strukturierungselementen wenigstens im Bereich der Krümmung, wobei der Gegenstand eine Entnahmerichtung besitzt, die sich im Fall von parallel zueinander ausgerichteten Seitenflächen der Mikrostrukturierungselemente durch die zu diesen Seitenelementen parallele Richtung definiert und sofern die Seitenelemente der Mikrostrukturierungselemente nicht parallel zueinander ausgerichtet sind, durch diejenige Richtung bestimmt, mit der es mit geringstem Kraftaufwand möglich ist, den Gegenstand mit Mikrostrukturierung aus einer Form zu entnehmen, in der dieser Gegenstand geformt wurde,
wobei
(i) die Strukturierungselemente unabhängig von der Krümmung parallel zu einander ausgerichtet sind,
(ii) die Strukturierungselemente jeweils eine von der Oberfläche des Gegenstandes weg gerichtete zu den anderen Mikrostrukturierungselementen gleichgroße Fläche besitzen und
(iii) die jeweilige Entfernung zwischen den jeweils benachbarten (bevorzugt parallel ausgerichteten) Seitenflächen der Strukturierungselemente gleich ist,

- wenn diese Strukturierungselemente gemeinsam auf einer der Ebenen liegen, in der auch die Entnahmerichtung liegt, und
- die Entfernung auf einer Geraden gemessen wird, die jeweils parallel zur Tangente verläuft, die an dem Streckenmittelpunkt zwischen den jeweiligen Strukturierungselementen anliegt und
- wobei die Tangente und die dazu parallele laufende Gerade, auf der gemessen wird, so gelegt werden, dass die kürzest mögliche Strecke entsteht, die beide benachbarte Strukturierungselemente berührt und
- im von der Oberfläche des Gegenstandes entferntesten Punkt wenigstens einer der Seitenflächen und endet.

Die Erläuterung der erfindungsgemäßen Lösung lässt sich sehr gut anhand der Fig. 1 bis 3 durchführen. Dabei ist die
- Fig. 1: die schematische Darstellung einer erfindungsgemäßen Lösung,
- Fig. 2: eine weitere schematische Darstellung der erfindungsgemäßen Lösung und die
- Fig. 3: ebenfalls eine alternative schematische Darstellung der erfindungsgemäßen Lösung.

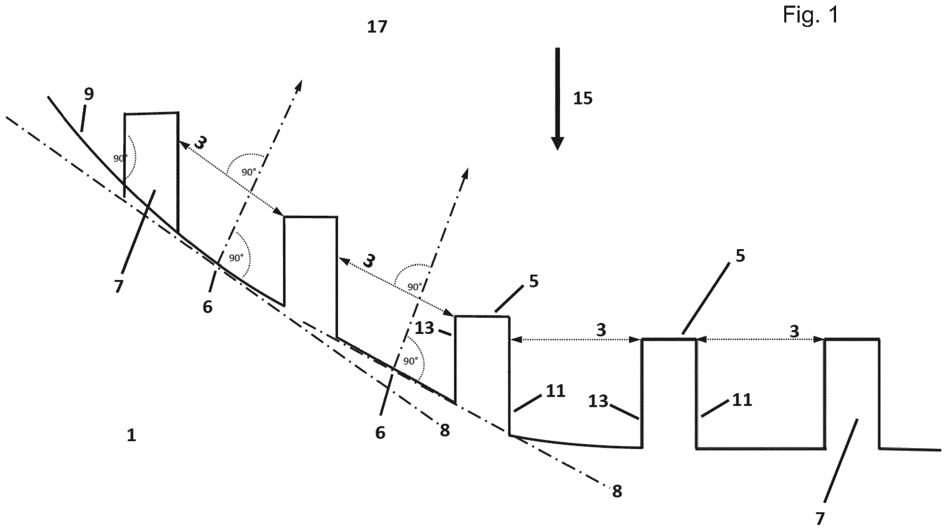

Die Bezugszeichen bedeuten für alle Fig. 1 bis 3 dabei Folgendes:
- 1: Gegenstand
- 3: Entfernung zwischen den jeweils benachbarten, bevorzugt parallel ausgerichteten Seitenflächen
- 5: vom Gegenstand weg gerichtete Fläche
- 6: Streckenmittelpunkt zwischen zwei Strukturierungselementen
- 7: Strukturierungselemente
- 8: Tangente anliegend am Streckenmittelpunkt 6
- 9: Krümmung der Oberfläche
- 11, 13: Seitenflächen der Strukturierungselemente
- 15: Entnahmerichtung
- 17: Form

Die Strukturierungselemente im Sinne dieser Erfindung sind Erhebungen aus der Oberfläche 9 des Gegenstandes 1 in einer Größenordnung einer Höhe von 100 nm bis 1 mm, bevorzugt 1 µm bis 0,5 mm, weiter bevorzugt 10 µm bis 250 µm.

Die Strukturierungselemente bilden gemeinsam die Mikrostrukturierung.

Sofern von der gekrümmten Oberfläche oder der Oberfläche des Gegenstandes gesprochen wird, ist damit insbesondere der Bereich zwischen den Mikrostrukturierungselementen zu verstehen. Es ist selbstverständlich, dass auch die Mikrostrukturierungselemente Teil der Oberfläche des Gegenstandes sind; sofern aber im Rahmen dieser Anmeldung nicht explizit darauf hingewiesen wird, ist mit der Oberfläche des Gegenstandes der Verlauf der Oberfläche gemeint, der ohne die Mikrostrukturierungselemente vorliegen würde.

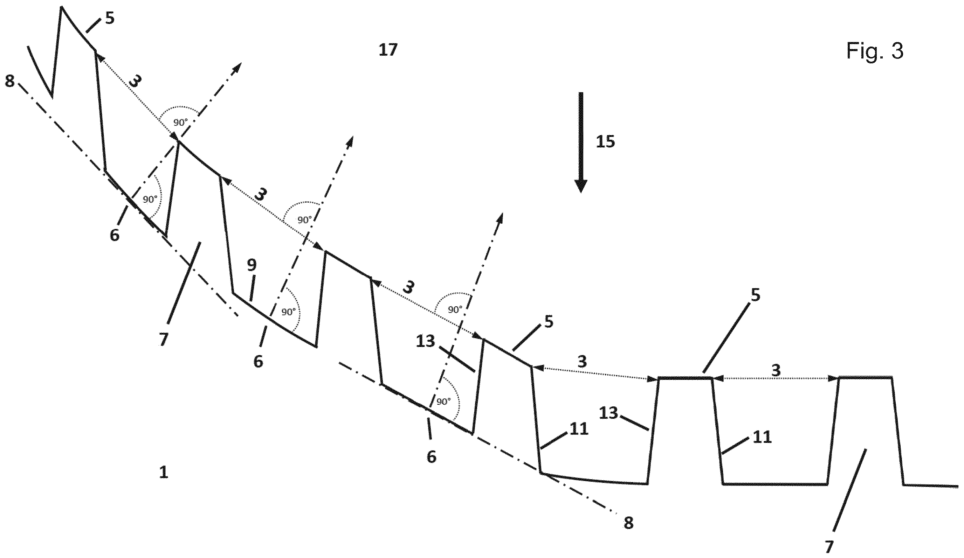

Die Entnahmerichtung 15 definiert sich im Falle von parallel zueinander ausgerichteten Seitenflächen (der Mikrostrukturierungselemente) 11 und 13 durch in die zu diesen Seitenelementen parallele Richtung. Sofern die Seitenelemente 11 und 13 nicht parallel zueinander ausgerichtet sind, wie es z. B. in der Fig. 3 der Fall ist, bestimmt sich die Entnahmerichtung 15 durch diejenige Richtung, die es mit dem geringsten Kraftaufwand ermöglicht, den Gegenstand mit Mikrostrukturierung aus einer Form zu entnehmen, in der dieser Gegenstand geformt wurde.

Im Sinne der vorliegenden Anmeldung sind Strukturierungselemente parallel zueinander ausgerichtet, wenn die jeweiligen Seiten 13 bzw. die jeweiligen Seiten 11 der einzelnen Strukturierungselemente 7 zueinander parallel sind. Die Entfernung 3 zwischen den einzelnen Strukturierungselementen 7 ist jeweils gleich, sofern die Strukturierungselemente 7 in einer Ebene liegen, in der auch die Entnahmerichtung liegt. Dabei verläuft die Strecke 3 parallel zur Tangente 8, die auf dem Streckenmittelpunkt 6 zwischen den jeweiligen Strukturierungselementen 7 anliegt. Der Streckenmittelpunkt definiert sich dabei als der Mittelpunkt der kürzesten Strecke zwischen zwei Strukturierungselementen, wobei faktisch an der engsten Stelle eines Tals zwischen zwei Strukturierungselementen gemessen wird.

Wie aus den Fig. 1, 2 und 3 hervorgeht, ist es möglich, die Strukturierungselemente 7 in unterschiedlicher Weise auszugestalten. Bedeutsam im Sinne dieser Erfindung ist die Parallelität der Strukturierungselemente gegenüber der Entnahmerichtung. So ist es möglich, mit einem möglichst geringen Widerstand und insbesondere ohne Hinterschneidungen den Gegenstand nach seiner Formgebung aus der Form zu entnehmen, ohne dass die Mikrostrukturierung mechanisch über die Maße beansprucht wird. Durch die spezielle Ausgestaltung der Flächen 5 und die Entfernung der Mikrostrukturierungselemente zueinander ist es möglich, einem Flüssigkeitstropfen, bezogen auf die Senkrechte über der Oberfläche des Gegenstandes 1 eine sehr ähnliche bis weitgehend identische Mikrostrukturierungsfläche zur Verfügung zu stellen, auf der er zu liegen kommt. Dies hat positive Folgen für den sich ausbildenden Wasserrandwinkel. Eine erfindungsgemäße bevorzugte Variante ist ein Gegenstand, wobei die Strukturierungselemente 7 einen runden, quadratischen, ovalen oder rechteckigen Querschnitt gleicher Fläche über wenigstens die Hälfte ihrer Höhe verfügen.

Solche Strukturierungselemente sind gut handhabbar, verhältnismäßig stabil, und es bestehen Techniken, sie zu erzeugen.

Erfindungsgemäß bevorzugt ist ein Gegenstand, wobei die von der Oberfläche des Gegenstandes weg gerichteten Flächen der Strukturierungselemente parallel zueinander ausgerichtet sind.

Diese Situation ist in der Fig. 1 dargestellt. Der Vorteil an dieser Form von Strukturierungselementen besteht darin, dass sie technisch leicht zu erzeugen sind bzw. dass eine Form für sie technisch leicht zu erzeugen ist.

Eine noch weiter bevorzugte Alternative ist ein erfindungsgemäßer Gegenstand, wobei an der Oberfläche des Gegenstandes weg gerichteten Flächen der Strukturierungselemente parallel zu der gekrümmten Oberfläche des Bauteils ausgerichtet sind.

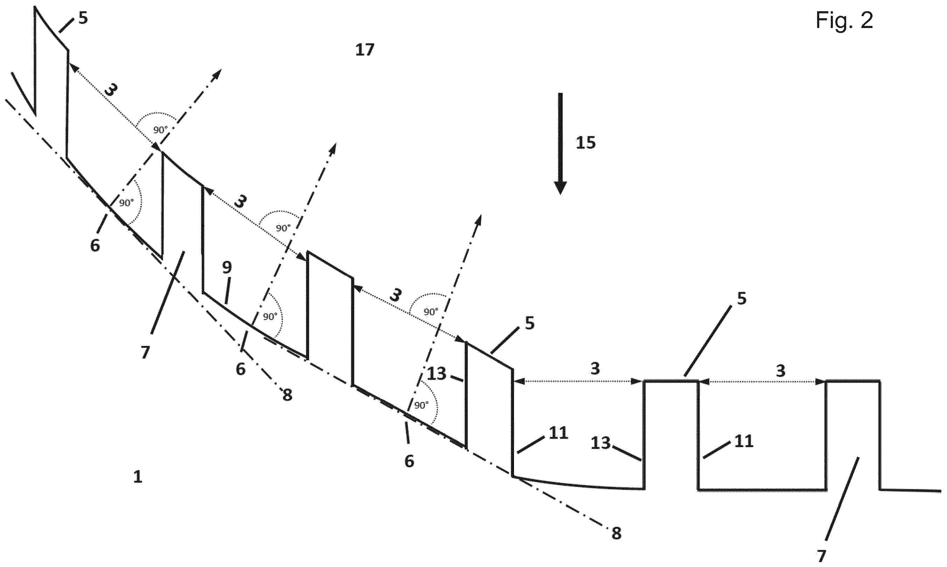

Diese Variante ist in den Fig. 2 und 3 verwirklicht. Dies hat den Vorteil, dass senkrecht über der Oberfläche für einen Flüssigkeitstropfen die gleiche Auflagefläche an jeder Stelle der Krümmung vorhanden ist.

Wie bereits oben angedeutet, ist es im Sinne der Erfindung notwendig, dass die Strukturierungselemente 7 so ausgerichtet sind, dass im Sinne der Entnahmerichtung 15 Hinterschneidungen vermieden werden. Nur so ist eine zerstörungsfreie Entformung aus der Form beim Formen des Gegenstandes möglich.

Bevorzugt im Sinne der Erfindung ist, dass die Seiten der Strukturierungselemente 7 in Richtung der Entformungsrichtung parallel mit maximal Auslenkung von 1 bis 3°, bevorzugt vollständig parallel ausgestaltet sind. In einer weiteren Ausführungsform ist es besonders bevorzugt, wenn man Ausformschrägen von 0,1 bis 5° (positive Ausformschrägen bedeuten den Gegenteil von Hinterschnitten) wählt. Diese Ausführungsform ist insbesondere zu wählen, wenn die auszuformenden Materialien besonders steif sind und / oder wenig Schrumpf während der Formgebung erfahren. Dieser Schrumpf kann durch Abkühlung und / oder bei chemisch reaktiven Systemen durch Vernetzung hervorgerufen werden.

Dabei ist es bevorzugt, dass die Mikrostrukturierungselemente selber als Grundform eine Quaderform, eine Würfelform, eine Prismenform (mit abgeschnittener Spitze), eine Zylinderform oder die Form einer abgestumpften Pyramide oder eines abgestuften Kegels, als auch die Form eines doppelt abgestumpften Ellipsoiden besitzen. Insbesondere sind Strukturierungselemente in Walzen- oder Kegelform bevorzugt. Dabei wird der Fachmann anhand des oben Beschriebenen verstehen, dass die jeweils beschriebenen Formen nur gelten, soweit sie nicht die "Verankerung" des Mikrostrukturierungselementes in der Oberfläche des Gegenstandes betreffen und in einigen Ausgestaltungen auch soweit sie nicht die Fläche 5 im oberen Bereich der Strukturierungselemente betreffen.

Die Anordnung der Strukturierungselemente im erfindungsgemäßen Gegenstand ermöglicht nicht nur eine gute Entnahme aus der Form, sondern stellt gleichzeitig sicher, dass aus der Betrachtungsweise senkrecht zur Oberfläche 9 des Gegenstandes weitgehend die gleiche Auflagefläche für Flüssigkeitstropfen zur Verfügung steht.

Die erfindungsgemäßen Gegenstände umfassen wenigstens eine gekrümmte Fläche, wobei diese Fläche in wenigstens einer Raumrichtung, bevorzugt aber in wenigstens zwei Raumrichtungen gekrümmt ist.

Aufgrund der erfindungsgemäßen Anordnung der Strukturierungselemente ist es erfindungsgemäß bevorzugt, dass die Steigung der Krümmung in jede Raumrichtung bezogen auf die Entnahmerichtung 15 ≤ 70° ist, bevorzugt ≤ 65° und weiter bevorzugt ≤ 60°. Dabei ist es nicht erforderlich für den erfindungsgemäßen Gegenstand, dass sämtliche Krümmungen in Raumrichtung diese Werte unterschreiten. Es ist jedoch bevorzugt, dass in wenigstens einer Krümmung eine entsprechende Wertunterschreitung vorliegt.

Bevorzugt ist ein erfindungsgemäßer Gegenstand, wobei die Strukturierungselemente 7 aus dem gleichen Material bestehen wie die darunterliegende Oberfläche des Gegenstandes, bevorzugt wie der gesamte Gegenstand.

Ein solcher Gegenstand ist über eine Vielzahl von Formgebungsverfahren zugänglich, wobei die Mikrostrukturierung aus dem zu formenden Material gebildet wird.

Bevorzugt ist ein erfindungsgemäßer Gegenstand, wo im Bereich der Mikrostrukturierung zusätzlich Makrostrukturen vorgesehen sind zum mechanischen Schutz der Mikrostrukturierung.

Eine Makrostruktur im Sinne dieser vorliegenden Erfindung ist bevorzugt netzartig angeordnet mit Netzlöchern, deren Zellbegrenzungen einen maximalen Abstand von 500 µm bis 100 mm, bevorzugt 1 mm bis 25 mm, weiter bevorzugt 3 mm bis 10 mm aufweisen. Bevorzugte Zellgeometrien sind Dreiecke, Vierecke, Fünfecke und Sechsecke. Es können ebenfalls Zellen mit einer L-Geometrie, einer T-Geometrie, Doppel-T-Geometrie, S-Geometrie oder verschränkten T-Geometrie (analog Verbund-Pflastersteinen) Verwendung finden. Diese Geometrien können auch kombiniert werden, um schließlich das Netz aufzubauen.

Die Stegbreite dieser Netzstruktur ist, um den Effekt der Mikrostrukturierung nicht zu stark zu stören, besonders klein zu halten, so dass der Traganteil der Makrostruktur möglichst klein ist. Die Stegbreiten sind zwischen 50 µm und 2 mm, bevorzugt 200µm und 500µm zu wählen.

Die Netzstruktur weist Strukturhöhen im Bereich 50 µm bis 100 mm, bevorzugt 100µm bis 3 mm, bevorzugt 200 µm bis 1 mm auf.

Durch die Makrostruktur kann die Mikrostruktur bei schabender Beanspruchung effektiv vor Beschädigung geschützt werden. Bei der Auswahl der Größe der Netzlöcher berücksichtigt man bereits bei Auslegung die Größe der Struktur, die eine mechanische Beanspruchung im späteren Gebrauch des Artikels auslösen kann.

Auch bei den Makrostrukturen weisen die einzelnen Stege bevorzugt Ausformschrägen auf, die das sichere Ausformen ermöglichen, bevorzugt zwischen 0,01° und 5°, weiter bevorzugt 0,1° und 2°, besonders bevorzugt 0,5 und 1°.

Sofern Makrostrukturen im Bereich der erfindungsgemäß vorzusehenden Mikrostrukturierung vorhanden sind, ist es selbstverständlich, dass die Entfernungen zwischen den benachbarten Strukturierungselementen, wie sie Merkmal der vorliegenden Erfindung sind, nur für die Bereiche gelten, wo gleichartige Elemente, die Teil der Mikrostrukturierung sind, nebeneinanderliegen. Mit anderen Worten, Makrostrukturen, die zwischen Strukturierungselementen der Mikrostrukturierung liegen, sorgen dafür, dass die Entfernungsvorgaben zwischen den (durch die Makrostruktur unterbrochenen) Mikrostrukturierungsbereichen nicht gelten.

Erfindungsgemäß bevorzugt ist ein erfindungsgemäßer Gegenstand, wobei der Gegenstand hergestellt oder herstellbar ist durch ein Urformverfahren aus dem flüssigen oder plastischen Zustand, insbesondere ein Formverfahren ausgewählt aus der Gruppe bestehend aus Spritzguss-, Schwerkraftgieß-, Druckgieß- und Niederdruckgießverfahren, oder ein Umformverfahren insbesondere ausgewählt aus der Gruppe der Druckumformverfahren wie z.B. Prägen.

Bei diesem Herstellungsverfahren wirken sich die Vorteile der erfindungsgemäß vorzusehenden Mikrostrukturierung besonders gut aus.

Weiter erfindungsgemäß bevorzugt ist ein erfindungsgemäßer Gegenstand, wobei der Gegenstand im Bereich der Mikrostrukturierung über einen statischen Wasserrandwinkel gemessen nach DIN 55660 von ≥ 130°, bevorzugt ≥ 150° verfügt. Dabei ist es selbstverständlich, dass die Messung des Wasserrandwinkels im Sinne der vorliegenden Erfindung stets senkrecht über der Oberfläche des erfindungsgemäßen Gegenstandes vorgenommen wird.

Es ist also möglich, mit der erfindungsgemäß einzusetzenden Mikrostrukturierung Situationen zu schaffen, bei denen der Wasserrandwinkel auch bei gekrümmten Oberflächen bei einer Messung senkrecht zur Oberfläche stets annähernd gleich ist oder sogar vollständig gleich ist. Dies ist insbesondere für dynamische Anwendungen wie z. B. in Rohren oder Rinnen interessant, bei denen Flüssigkeitstropfen mit einer hohen Geschwindigkeit geführt werden, sodass diese in Kurven entlang dem Kurvenverlauf durch eine durch die Krümmung bewirkte Fliehkraft an die Oberfläche des Gegenstandes gepresst werden.

Teil der Erfindung ist auch eine Form oder ein Formteil jeweils mit einer wenigstens teilweise gekrümmten Oberfläche in der Formungskavität für einen Gegenstand nach einem der vorrangehenden Ansprüche, umfassend das Negativ einer Mikrostrukturierung auf der gekrümmten Oberfläche wie sie weiter oben definiert ist.

Eine solche Form oder ein solches Formteil ist dazu geeignet, den erfindungsgemäßen Gegenstand in einem Formgebungsverfahren herzustellen oder an seiner Herstellung mitzuwirken. Dabei funktioniert die Herstellung insbesondere so, indem ein Material eingesetzt wird, das in der Form geformt wird und nachfolgend in Entnahmerichtung aus der Form entnommen wird.

Teil der Erfindung ist auch die Verwendung einer Mikrostrukturierung, wie sie erfindungsgemäß einzusetzen ist, zur Erzeugung einer Oberfläche mit einem statischen Wasserrandwinkel gemessen nach DIN 55660 von ≥ 130°, bevorzugt ≥ 150°.

Wie bereits oben beschrieben, ist im Sinne der Erfindung der Wasserrandwinkel senkrecht über der Oberfläche des Gegenstandes zu messen, dies kann im Zweifelsfall dadurch passieren, dass der Gegenstand so gekippt wird, dass die für die Wasserrandwinkel notwendige Flüssigkeit senkrecht über der Oberfläche liegt.

Teil der Erfindung ist auch ein Verfahren zur Erzeugung einer erfindungsgemäßen Form oder eines erfindungsgemäßen Formteiles, umfassend die Schritte:
a) Bereitstellen einer Form oder eines Formteils jeweils mit wenigstens teilweise gekrümmten Oberfläche in der Formungskavität und
b) Einbringen eines Negativs einer wie oben definierten Mikrostrukturierung auf der gekrümmten Oberfläche in der Formungskavität.

Mit diesem Verfahren ist es möglich, die für die Abformung bzw. Herstellung des erfindungsgemäßen Gegenstandes notwendige oder wenigstens hilfreiche Form zu erstellen.

Teil der Erfindung ist auch ein Verfahren zur Erzeugung eines erfindungsgemäßen Gegenstandes, umfassend die Schritte:
a) Bereitstellen eines erfindungsgemäßen Formteils oder einer erfindungsgemäßen Form,
b) Bereitstellen des Materials für den Gegenstand und
c) Formen des Gegenstandes mit Hilfe der Form oder des Formteils.

Selbstverständlich ist es im Sinne der Erfindung bevorzugt, dass die Entnahme des Gegenstandes aus der Form in Entformungsrichtung erfolgt.

Durch die vorliegende Erfindung ist es möglich, die Strukturierungselemente so anzuordnen, dass sie dem generellen Verlauf der Oberfläche des Gegenstandes ortslokal angepasst sind. Damit ist es möglich, bezogen auf die Senkrechte über gekrümmten Oberflächen besonders gleichmäßige Auflagebedingungen für Flüssigkeiten zu erzeugen.

Die erfindungsgemäß einzusetzenden Formen sind über verschiedene Herstellungsverfahren zugänglich. Der Fachmann ist dabei in der Lage, mit den geeigneten Mitteln entsprechende Formen herzustellen.

Eine Variante hierzu ist die Lasermikrostrukturierung: Gepulste Laser werden bevorzugt für die Erzeugung von mikrostrukturierten Formen, aber auch von mikrostrukturierten Oberflächen im Sinne der vorliegenden Erfindung eingesetzt. Durch den gezielten Materialabtrag sind Laserstrukturierungen sehr präzise und beeinflussen die Eigenschaften des umliegenden Materials nicht. Mikrobearbeitungen durch Laserbearbeitung weisen ein hohes technisches und ökonomisches Potential auf. Die Einsatzbereiche sind vielfältig. In diesem Mikrostrukturierungsverfahren ist es möglich, Mikrostrukturierungen sowohl als positiv (im Sinne des erfindungsgemäßen Gegenstandes) oder als negativ (im Sinne der erfindungsgemäßen Form) herzustellen. Dabei ist es bevorzugt, die Lasermikrostrukturierung für die Form einzusetzen.

Durch den Einsatz von Ultrakurzpuls-Lasern kann eine schmelzearme und gratfreie Strukturierung mit hoher Präzision in nahezu allen Materialien erzeugt werden, sodass noch nicht einmal eine Nachbearbeitung nötig ist. Abhängig vom Material und den herzustellenden Stückzahlen erfolgt die Laserbehandlung entweder direkt auf dem Bauteil oder replikativ während eines Ur- oder Umformungsprozesses wie dem Spritzguss.

Ein alternatives Verfahren zur Herstellung der erfindungsgemäß einzusetzenden Mikrostrukturen ist das SLM-Verfahren. Beim Lasersintern von metallischen Pulvern (Selective Laser Melting - SLM) wird die Bauteilkonstruktion in Bauebenen zerlegt und anschließend diese Information Schicht für Schicht von einem Laser in ein Pulverbett geschrieben. Dabei schmilzt die durch den Laser eingebrachte Energie ein Metallpulver in einem sehr schmalen Bereich auf, wodurch sich letztendlich metallische Bauteile unterschiedlicher Größe mit sehr hoher geometrischer Freiheit herstellen lassen. Die SLM-Technologie gehört zu den additiven Fertigungsverfahren, die eine Bauteilherstellung direkt aus einem Datensatz heraus erlauben. Durch die gezielte Parametereinstellung und Pulverauswahl lässt sich die Oberflächenstruktur variieren und funktionalisieren. Ebenso ermöglicht der hohe konstruktive Freiheitsgrad des SLM-Verfahrens eine weitere Funktionsintegration durch das Einbringen innerer Strukturen, z. B. Reaktionskanäle in das Bauteil.

Für die Hydrophobizität oder Hydrophobiephilie der Oberfläche der erfindungsgemäßen Gegenstände spielt die erfindungsgemäße vorzusehende Mikrostrukturierung eine wesentliche Rolle, ebenfalls werden die entsprechende Effekte aber von den Stoffeigenschaften des Materials bestimmt, aus dem die Oberfläche des Gegenstandes (einschließlich der Mikrostrukturierung) besteht. Vor diesem Hintergrund kann es erfindungsgemäß bevorzugt sein, einem erfindungsgemäßen Gegenstand mit einer konturnachbildenden Beschichtung wenigstens im Bereich der Mikrostrukturierung zu versehen. Mittels dieser Beschichtung ist es möglich, die Oberflächeneigenschaften des Gegenstandes weiter zu verändern. Bevorzugt sind solche Beschichtungen, die im Plasmaverfahren abgeschieden werden, also insbesondere solche Schichten aus dem PE-CVD Verfahren. Bevorzugte Beschichtungen der Mikrostrukturierung besitzen Schichtdicken von ≤ 2µm, bevorzugt ≤ 0,5µm. Da sie konturnachbildend sind, ändern sie nicht die prinzipielle Anordnung in den Oberflächenstrukturen (Strukturierungselemente) zu einander. Sofern eine solche Beschichtung vorgesehen ist, wird der Fachmann nicht nur eine für seine Zielgrößen wie z.B. Superhydrophobizität oder Superhydrophobiephilie geeignete Beschichtung wählen, sondern er wird auch bei dem Vorsehen der Mikrostrukturierung berücksichtigen, dass durch die Beschichtung zusätzliche Topographische Effekte wie z.B. Abstandsveränderung zwischen den einzelnen Strukturierungselementen entstehen, die auch dann eine Rolle spielen können, wenn die zusätzliche Beschichtung verhältnismäßig dünn ist.

Die zusätzlichen, insbesondere plasmapolymeren Beschichtungen dienen nicht primär einem zusätzlichen mechanischen Schutz, müssen aber grundsätzlich so ausgestaltet sein, dass sie den zu erwartenden Oberflächenbelastungen genügen. Dies gilt natürlich auch für evtl. chemische und physikalische wie z.B. thermische Anforderungen. Hier stehen dem Fachmann eine Vielzahl von Beschichtungen zur Verfügung, die er für die gewünschten Zwecke geeignet auswählen wird.

### Literaturliste:

1 Neinhuis, C. & Barthlott, W. (1997) Characterization and distribution of water-repellent, self-cleaning plant surfaces; Ann. Botany79, 667-677.
2 Nachtigall W. (1998) Bionik: Grundlagen und Beispiele für Ingenieure und Naturwissenschaftler; Berlin, Heidelberg, New York: Springer Verlag, 320.
3 Cerman Z., W. Barthlott & J. Nieder. (2005) Erfindungen der Natur. Bionik - Was wir von Pflanzen und Tieren lernen können; Hamburg: Rowohlt Taschenbuch Verlag, 281.
4 Sanchez C., H. Arribart & M.M. Giraud Guille. (2005) Biomimetism amd bioinspiration as tools for the design of innovative materials and systems; Nature Materials 4, 277-288
5 Cassie, A. & Baxter, S. (1944) Wettability of porous surfaces. Trans. Faraday Soc. 40, 546-551
6 J. T. Korhonen, T. Huhtamäki, O. Ikkala, R. H.A.Ras (2013) Reliable Measurement of Receding Contact Angle; Langmuir 29 (12), 3858-3863.
7 T. Verho, C. Bower, P. Andrew, S. Franssila, O. Ikkala, R.H.A. Ras (2010) Mechanically Durable Superhydrophobic Surfaces; Adv. Mater. 1-6
8 Burton, Z. and Bhushan, B., (2006) Surface Characterization and Adhesion and Friction Properties of Hydrophobie Leaf Surfaces. Ultramicroscopy 106, 709-719
9 B. BHUSHAN, M. NOSONOVSKY (2010) The rose petal effect and the modes of superhydrophobicity; Phil. Trans. R. Soc. A, 368, 4713-4728
10 Ch. Hopmann, E. Duffner (2016) Herstellung mikroskaliger und mikrostrukturierter Produkte; 28. Internationales Kolloquium Kunststofftechnik, 541-577
11 R17022 (siehe Anhang)
12 Knappe, R., Brüning, S. Gillner, A.: Kleinste Strukturen auf großen Flächen. Laser Technik Journal, Vol. 8, 4, pp. 24-27, 2011
13 Bayard, T.: Laserstrahl versus Diamantstichel, Druck&Medien Magazin, Vol. 05/2004
14 Hansen H. N., Theilade, U. A., (2005) Surface Microstructure Replication in Injection Moulding; Multi-material Micro Manufacture 1-4
16 EP000001899048B1
17 DE102013219337B3
18 Y. C. JUNG & B. BHUSHAN (2008) Wetting behaviour during evaporation and condensation of water; Journal of Microscopy, Vol. 229, Pt 1, pp 127-140
19 Von Vladsinger - Eigenes Werk. Based on File: Microstruct superhydrophobic.png, by Acannon2, CC BY-SA 3.0, https://commons.wikimedia.org/w/index.php?curid=32432553
20 Wang, Shutao; Jiang, L. (2007). "Definition of superhydrophobic states". Advanced Materials. 19 (21): 3423-3424. doi:10.1002/adma.200700934.

### Beispiele:

### Beispiel 1: Messung des Wasserrandwinkels

Die Messung des Wasserrandwinkels erfolgt mit einem handelsüblichen Kontaktwinkelmessgerät unter Einhaltung der DIN 55660. Der Anwender wird darauf achten, dass der jeweilige Messort so angeordnet ist, dass der Tropfen durch die Schwerkraft nicht aus dem Beobachtungsbereich rollt (ortlokale horizontale Ausrichtung in alle Raumrichtungen). Der Tropfen wird vorsichtig abgelegt und zeitnah statisch durch anlegen der Tangenten am Dreiphasenpunkt vermessen. Bevorzugt wird der Anwender darauf achten die Dosiernadel vor der Messung zu entfernen. Weiterhin ist es angeraten die Oberfläche durch mehrere Messorte zu bewerten.

Im Falle einer superhydrophilen Oberfläche wird eine Kontaktwinkelmessung nicht möglich sein, denn es wird spontane Benetzung eintreten. Als eine alternative Bestimmungsmethode steht der Break-up-Time-Test (BUT) zur Verfügung. Dabei wird die Probe in Wasser eingetaucht, wieder herausgezogen und beobachtet, wie lange sie benetzt bleibt. Die benetzte Zeit sollte ≥ 10 s betragen. Dann gilt Superhydrophilie als gegeben. Als weitere weniger bevorzugte Messmethode kann überprüft werden, ob die Probe nach Anhauchen beschlägt. Dies darf maximal 2-3 s der Fall sein.

### Beispiel 2: Herstellung einer erfindungsgemäßen Form

Zur Herstellung einer erfindungsgemäßen Form wird zunächst das bauteilspezifische Formwerkzeug nach dem Stand der Technik aus den üblichen Materialien, wie Aluminium oder Stahl oder Edelstahl hergestellt. Anschließend wird die zu strukturierende Oberfläche einer Laserbearbeitung unterzogen.

Bevorzugt werden hierfür insbesondere Ultrakurzpulslaser eingesetzt. Die später erhabenen Strukturen werden über Laserbohren in die Oberfläche eingebracht.

Der Bearbeiter wird darauf achten, dass die Laserbearbeitung parallel zur späteren Entformungsrichtung vorgenommen wird. Ferner wird der Bearbeiter darauf achten, dass der jeweilige Abstand der Strukturen (also die Orte seiner Bohrung) abhängig von der jeweiligen Krümmung zwischen zwei benachbarten Strukturen eingestellt wird. Der Abstand muss auf einer dreidimensional gekrümmten Bauteiloberfläche somit ortslokal, individuell eingestellt werden.

Bevorzugt wird der Bearbeiter darauf achten, dass die mittlere Bohrlochtiefe der Strukturen in der Krümmung der Tiefe entspricht, wie sie auf einer ebenen Fläche einzustellen wäre. Weiterhin wird der Bearbeiter bevorzugt darauf achten, dass die Fläche im Bohrlochgrund (5) der ortslokalen Krümmung des Bauteiles entspricht.

Grundsätzliche Maßnahmen, um ungewollte Laserreflektionen an gegenüber dem Laserstrahl geneigten Oberflächen entgegen zu wirken sind zu treffen.

Es wurde als Beispiel in einem Werkzeug eine Struktur für jedes Strukturierungselement hergestellt, welches zylinderförmig ist, über einen Durchmesser von 25 µm verfügt, eine Tiefe von 65 µm aufweist. Die Strukturierungselemente zeigen in einer Ebene senkrecht zur Entformungsrichtung (15) einen Strukturabstand (3) von 110 µm zeigen. Alle Strukturen sind parallel zueinander ausgerichtet. Wird am Mittelpunkt (6) zwischen zwei ausgewählten Strukturen innerhalb einer Ebene im gekrümmten Bereich eine Tangente (8) angelegt und ergibt sich an diesem Messpunkt ein Winkel von 50° zur Horizontalen. Entsprechend wurde der Abstand zwischen den Strukturen an diesem ausgewählten Ort auf ca. 70 µm eingestellt.

In einem anderen Werkzeug werden rechteckige Strukturen erzeugt. Sie verfügen über einen Abstand von 60 µm von Seite zu Seite (kürzeste Strecke), eine Tiefe im Werkzeug von 80 µm und einen Strukturabstand (3) in einer Ebene senkrecht zur Entformungsrichtung (15) von 190 µm.

### Beispiel 3: Herstellung eines erfindungsgemäßen Gegenstandes

Die in Beispiel 2 hergestellte und mit ortslokalen Strukturen ausgelegte Form wird sodann in einem Spritzgussprozess verwendet. Es wird bevorzugt ein Thermoplast verarbeitet, in diesem Beispiel ABS (Acrylnitril-Butadien-Styrol). Es könnten jedoch auch reaktive Kunststoffe oder Vulkanisate zum Einsatz kommen könnten.

Der Thermoplast-Spritzgussprozess wird bevorzugt variotherm ausgeführt, um die Strukturen möglichst perfekt abbilden zu können. Entsprechend wird die Werkzeugwand für den Einspritzvorgang erwärmt, bevor es anschließend auf Entformungstemperatur abgekühlt wird. Dadurch erstarrt das Bauteil, so dass das Werkzeug geöffnet werden kann. Bevorzugt ist das Werkzeug so ausgelegt, dass bei diesem Vorgang bereits die Entformung der strukturierten Oberfläche stattfinden kann. Das eigentliche Bauteil wird anschließend entsprechend dem Stand der Technik ausgeworfen oder anderweitig entnommen.

Entsprechend der Materialauswahl und der geforderten Oberflächenfunktion wird alsdann das strukturierte Bauteil einem Beschichtungsprozess nach dem Stand der Technik unterworfen. Zur Herstellung einer superhydrophoben Oberfläche wird dazu beispielsweise eine Beschichtung nach WO 2007/118905A1 verwendet. Ist es dagegen das Ziel eine superhydrophile Oberfläche zu erzeugen, kann man die Oberfläche beispielsweise mit Hilfe sauerstoffhaltiger Gase aktivieren oder auch eine stark hydrophile Beschichtung mit Acrylsäure verwenden.

Nach der Beschichtung kann die Benetzungseigenschaft entsprechend Beispiel 1 überprüft werden. Wird eine hydrophobe Beschichtung entsprechend der obigen Angabe gewählt, so ergeben sich an jedem mikrostrukturierten Ort superhydrophobe Eigenschaften. Sofern das Bauteil zusätzlich mit einer Makrostruktur zum mechanischen Schutz der Mikrostrukturen ausgestattet ist, so ist es in einer dynamischen Anwendung leicht möglich, dass die Wassertropfen die Makrostruktur überwinden ohne ihre Kugelform aufzugeben.

## Patentansprüche

1. Gegenstand (1) mit wenigstens teilweise gekrümmter Oberfläche (9) mit einer Mikrostrukturierung aus Strukturierungselementen (7) wenigstens im Bereich der Krümmung (9),
wobei der Gegenstand eine Entnahmerichtung (15) besitzt, die sich im Fall von parallel zueinander ausgerichteten Seitenflächen der Mikrostrukturierungselemente (11 und 13) durch die zu diesen Seitenelementen parallele Richtung definiert und sofern die Seitenelemente (11 und 13) der Mikrostrukturierungselemente nicht parallel zueinander ausgerichtet sind, durch diejenige Richtung bestimmt, mit der es mit geringstem Kraftaufwand möglich ist, den Gegenstand mit Mikrostrukturierung aus einer Form zu entnehmen, in der dieser Gegenstand geformt wurde,
wobei
(i) die Strukturierungselemente (7) unabhängig von der Krümmung parallel zu einander ausgerichtet sind,
(ii) die Strukturierungselemente jeweils eine von der Oberfläche des Gegenstandes (1) weg gerichtete zu den anderen Mikrostrukturierungselementen gleichgroße Fläche (5) besitzen und
(iii) die jeweilige Entfernung (3) zwischen den jeweils benachbarten Seitenflächen (11, 13) der Strukturierungselemente (7) gleich ist,
- wenn diese Strukturierungselemente (7) gemeinsam auf einer der Ebenen liegen, in der auch die Entnahmerichtung (15) liegt, und
- die Entfernung (3) auf einer Geraden gemessen wird, die jeweils parallel zur Tangente (8) verläuft, die an dem Streckenmittelpunkt (6) zwischen den jeweiligen Strukturierungselementen (7) anliegt und
- wobei die Tangente (8) und die dazu parallele laufende Gerade, auf der gemessen wird, so gelegt werden, dass die kürzest mögliche Strecke (3) entsteht, die beide benachbarte Strukturierungselemente berührt und
- im von der Oberfläche des Gegenstandes (1) entferntesten Punkt wenigstens einer der Seitenflächen (11) und (13) endet.

2. Gegenstand nach Anspruch 1, wobei die Strukturierungselemente (7) einen runden, quadratischen, ovalen oder rechteckigen Querschnitt gleicher Fläche über wenigstens die Hälfte ihrer Höhe verfügen.

3. Gegenstand nach Anspruch 1 oder 2, wobei die von der Oberfläche des Gegenstandes (1) weg gerichteten Flächen (5) der Strukturierungselemente (7) parallel zueinander ausgerichtet sind.

4. Gegenstand nach Anspruch 1 oder 2, wobei die von der Oberfläche des Gegenstandes (1) weg gerichteten Flächen (5) der Strukturierungselemente (7) parallel zu der gekrümmten Oberfläche (9) des Bauteils (1) ausgerichtet sind.

5. Gegenstand nach einem der vorrangehenden Ansprüche, wobei die Strukturierungselemente (7) aus dem gleichen Material bestehen, wie der Rest des Gegenstandes.

6. Gegenstand nach einem der vorrangehenden Ansprüche, wobei im Bereich der Mikrostrukturierung zusätzlich Makrostrukturen vorgesehen sind zum mechanischen Schutz der Mikrostrukturierung.

7. Gegenstand nach einem der vorrangehenden Ansprüche, wobei der Gegenstand hergestellt oder herstellbar ist durch ein Urformverfahren aus dem flüssigen oder plastischen Zustand, insbesondere ein Formverfahren ausgewählt aus der Gruppe bestehend aus Spritzguss-, Schwerkraftgieß-, Druckgieß- und Niederdruckgießverfahren oder einem Umformverfahren ausgewählt aus der Gruppe der Druckumformverfahren.

8. Gegenstand nach einem der vorrangehenden Ansprüche, wobei der Gegenstand im Bereich der Mikrostrukturierung über einen statischen Wasserrandwinkel gemessen nach DIN 55660 von ≥ 130 °, bevorzugt ≥ 150 ° verfügt.

9. Form oder Formteil jeweils mit einer wenigstens teilweise gekrümmten Oberfläche in der Formungskavität für einen Gegenstand nach einem der vorrangehenden Ansprüche, umfassend das Negativ einer Mikrostrukturierung auf der gekrümmten Oberfläche wie in einem der vorrangehenden Ansprüche definiert.

10. Verwendung einer Mikrostrukturierung wie in einem der vorangehenden Ansprüche definiert zur Erzeugung einer Oberfläche mit einem statischen Wasserrandwinkel gemessen nach DIN 55660 von ≥ 130 °, bevorzugt ≥ 150 °.

11. Verfahren zur Erzeugung einer Form oder eines Formteils jeweils nach Anspruch 9, umfassend die Schritte:
a) Bereitstellen einer Form oder eines Formteils jeweils mit wenigstens teilweise gekrümmten Oberfläche in der Formungskavität und
b) Einbringen eines Negativs einer Mikrostrukturierung wie in einem der Ansprüche 1 bis 8 definiert auf der gekrümmten Oberfläche in der Formungskavität.

12. Verfahren zur Erzeugung eines Gegenstandes nach einem der Ansprüche 1 bis 8, umfassend die Schritte:
a) Bereitstellen einer Form oder eines Formteils jeweils nach Anspruch 9,
b) Bereitstellen des Materials für den Gegenstand und
c) Formen des Gegenstandes mit Hilfe der Form oder des Formteils.

## Claims

1. Object (1) having an at least partially curved surface (9) with a microstructuring of structuring elements (7) at least in the region of the curvature (9),
wherein the object has a removal direction (15) which, in the case of mutually parallel side faces of the microstructuring elements (11 and 13), is defined by the direction parallel to these side elements and, if the side elements (11 and 13) of the microstructuring elements are not mutually parallel, is determined by that direction which makes it possible to remove the object with microstructuring with as small as possible an expenditure of force from a mould in which this object was moulded,
wherein
(i) the structuring elements (7) are mutually parallel irrespective of the curvature,
(ii) the structuring elements each have a face (5) which is of equal size in relation to the other microstructuring elements and faces away from the surface of the object (1), and
(iii) the respective distance (3) between the respectively adjacent side faces (11, 13) of the structuring elements (7) is the same,
- when these structuring elements (7) lie together in one of the planes in which the removal direction (15) also lies, and
- the distance (3) is measured on a straight line which runs parallel to the tangent (8) that lies on the distance centre point (6) between the respective structuring elements (7), and
- wherein the tangent (8) and the straight line which runs parallel to it and on which the measurement is taken are located so as to produce the shortest possible distance (3) which touches the two adjacent structuring elements and
- which ends in the point on at least one of the side faces (11) and (13) which is furthest away from the surface of the object (1).

2. Object according to Claim 1, wherein the structuring elements (7) have a round, square, oval or rectangular cross section with the same surface area over at least half their height.

3. Object according to Claim 1 or 2, wherein those faces (5) of the structuring elements (7) that face away from the surface of the object (1) are parallel to one another.

4. Object according to Claim 1 or 2, wherein those faces (5) of the structuring elements (7) that face away from the surface of the object (1) are parallel to the curved surface (9) of the component (1).

5. Object according to one of the preceding claims, wherein the structuring elements (7) consist of the same material as the rest of the object.

6. Object according to one of the preceding claims, wherein additional macrostructures are provided in the region of the microstructuring for mechanical protection of the microstructuring.

7. Object according to one of the preceding claims, wherein the object is produced or can be produced by a primary forming process from the liquid or plastic state, in particular a moulding process selected from the group consisting of injection moulding, gravity casting, die casting and low-pressure casting processes or a primary forming process selected from the group of pressure forming processes.

8. Object according to one of the preceding claims, wherein the object has a static water contact angle, measured according to DIN 55660, of ≥ 130°, preferably ≥ 150°, in the region of the microstructuring.

9. Mould or mould part having an at least partially curved surface in the moulding cavity for an object according to one of the preceding claims, comprising the negative of a microstructuring on the curved surface as defined in one of the preceding claims.

10. Use of a microstructuring as defined in one of the preceding claims to create a surface with a static water contact angle, measured according to DIN 55660, of ≥ 130°, preferably ≥ 150°.

11. Method for creating a mould or a mould part according to Claim 9, comprising the following steps:
a) providing a mould or a mould part having an at least partially curved surface in the moulding cavity, and
b) introducing a negative of a microstructuring as defined in one of Claim 1 to 8 on the curved surface in the moulding cavity.

12. Method for creating an object according to one of Claims 1 to 8, comprising the following steps:
a) providing a mould or a mould part according to Claim 9,
b) providing the material for the object, and
c) moulding the object using the mould or the mould part.

## Revendications

1. Objet (1) avec une surface (9) incurvée au moins partiellement avec une microstructuration d'éléments de structuration (7) au moins dans la zone de la courbure (9),
dans lequel l'objet possède un sens de retrait (15) qui se définit dans le cas de surfaces latérales orientées parallèlement les unes aux autres des éléments de microstructuration (11 et 13) par le sens parallèle à ces éléments latéraux et dans la mesure où les éléments latéraux (11 et 13) des éléments de microstructuration ne sont pas orientés parallèlement l'un à l'autre, se détermine par le sens, avec lequel il est possible avec une dépense d'énergie la plus faible, de retirer l'objet avec la microstructuration d'un moule, dans lequel cet objet a été formé,
dans lequel
(i) les éléments de structuration (7) sont orientés indépendamment de la courbure parallèlement les uns aux autres,
(ii) les éléments de structuration possèdent respectivement une surface (5) de même taille que les autres éléments de microstructuration, dirigée loin de la surface de l'objet (1) et
(iii) l'éloignement (3) respectif est identique entre les surfaces latérales (11, 13) contiguës respectivement des éléments de structuration (7),
- lorsque ces éléments de structuration (7) se trouvent ensemble sur un des plans, dans lequel le sens de retrait (15) se situe aussi, et
- l'éloignement (3) est mesuré sur une droite qui s'étend respectivement parallèlement à la tangente (8) qui repose contre le point médian de parcours (6) entre les éléments de structuration (7) respectifs et
- dans lequel la tangente (8) et la droite s'étendant parallèlement à celle-ci, sur laquelle il est mesuré, sont placées de sorte que le parcours (3) le plus court possible apparaisse, lequel touche deux éléments de structuration contigus et
- au moins une des surfaces latérales (11) et (13) se termine dans le point le plus éloigné de la surface de l'objet (1).

2. Objet selon la revendication 1, dans lequel les éléments de structuration (7) disposent d'une section transversale ronde, carrée, ovale ou rectangulaire de même surface sur au moins la moitié de leur hauteur.

3. Objet selon la revendication 1 ou 2, dans lequel les surfaces (5) dirigées loin de la surface de l'objet (1) des éléments de structuration (7) sont orientées parallèlement les unes aux autres.

4. Objet selon la revendication 1 ou 2, dans lequel les surfaces (5) dirigées loin de la surface de l'objet (1) des éléments de structuration (7) sont orientées parallèlement à la surface (9) incurvée du composant (1).

5. Objet selon l'une quelconque des revendications précédentes, dans lequel les éléments de structuration (7) se composent du même matériau que le reste de l'objet.

6. Objet selon l'une quelconque des revendications précédentes, dans lequel dans la zone de la microstructuration, des macrostructures sont en outre prévues pour la protection mécanique de la microstructuration.

7. Objet selon l'une quelconque des revendications précédentes, dans lequel l'objet est ou peut être fabriqué par un procédé de formage initial de l'état liquide ou plastique, en particulier un procédé de formage sélectionné à partir du groupe composé de procédé de moulage par injection, coulée par gravité, coulée sous pression et coulée sous basse pression ou un procédé de formage initial sélectionné à partir du groupe des procédés de formage initial sous pression.

8. Objet selon l'une quelconque des revendications précédentes, dans lequel l'objet dans la zone de la microstructuration dispose d'un angle de bord d'eau statistique mesuré selon DIN 55660 de ≥ 130°, de préférence ≥ 150°.

9. Moule ou pièce moulée respectivement avec une surface incurvée au moins partiellement dans la cavité de formage pour un objet selon l'une quelconque des revendications précédentes, comprenant le négatif d'une microstructuration sur la surface incurvée comme définie dans l'une quelconque des revendications précédentes.

10. Utilisation d'une microstructuration comme définie dans l'une quelconque des revendications précédentes pour la génération d'une surface avec un angle de bord d'eau statistique mesuré selon DIN 55660 de ≥ 130°, de préférence ≥ 150°.

11. Procédé de génération d'un moule ou d'une pièce moulée respectivement selon la revendication 9, comprenant les étapes consistant à :
a) fournir un moule ou une pièce moulée respectivement avec une surface incurvée au moins partiellement dans la cavité de formage et
b) introduire un négatif d'une microstructuration comme définie dans l'une des revendications 1 à 8 sur la surface incurvée dans la cavité de formage.

12. Procédé de génération d'un objet selon l'une quelconque des revendications 1 à 8, comprenant les étapes consistant à :
a) fournir un moule ou une pièce moulée respectivement selon la revendication 9,
b) fournir le matériau pour l'objet et
c) former l'objet à l'aide du moule ou de la pièce moulée.
